# EUROPEAN PATENT APPLICATION

(11) **EP 4 675 794 A1**
(43) Date of publication of application: **07.01.2026**
(21) Application number: 23924934.5
(22) Date of filing: 28.09.2023
(51) Int. Cl.: H01M 50/244

(54) **BATTERY CASE, BATTERY PACK, AND VEHICLE**

(30) Priority: 28.02.2023 CN 202310233732
(71) Applicant: BYD Company Limited, Shenzhen, Guangdong 518118 (CN)
(72) Inventor: LIAO, Zhengyuan, Shenzhen, Guangdong 518118 (CN); XIE, Shifeng, Shenzhen, Guangdong 518118 (CN)
(74) Representative: Mathys & Squire
(86) International application number: PCT/CN2023/122942
(87) International publication number: WO 2024/178980

(57) **Abstract**

A battery box, a battery pack, and a vehicle are provided. The battery box includes a tray configured to carry a battery cell and a sealing cover covering a top of the tray. The tray includes a first plate body, a first support plate is disposed at two ends of the first plate body along an extension direction of the battery cell, and at least part of a projection of the first support plate on the first plate body covers an end area of the battery cell. The sealing cover includes a second plate body, a first reinforcing plate is disposed at two ends of the second plate body along the extension direction of the battery cell, and at least part of a projection of the first reinforcing plate on the second plate body covers the end area of the battery cell.

## Description

### CROSS-REFERENCE TO RELATED APPLICATIONS

The present disclosure claims priority to Chinese Patent Application No. 202310233732.4, filed with the China National Intellectual Property Administration on February 28, 2023 and entitled "BATTERY BOX, BATTERY PACK, AND VEHICLE", which is incorporated herein by reference in its entirety.

### TECHNICAL FIELD

The present disclosure relates to the field of vehicle technologies, and specifically, to a battery box, a battery pack, and a vehicle.

### BACKGROUND

Power batteries are a core component of new energy vehicles, and whether the power batteries have enough structural strength has an important effect on driving safety. For example, when the battery housing has design defects which cannot effectively support an internal battery cell, the stability of the battery cell during driving is affected. This can easily lead to poor contacts, thereby compromising power supply performance, and even causing safety accidents.

### SUMMARY

To overcome a problem in a related art, the present disclosure provides a battery box, a battery pack, and a vehicle.

According to a first aspect of embodiments of the present disclosure, a battery box is provided, where the battery box includes:
a tray, configured to carry a battery cell, wherein the tray includes a first plate body, a first support plate disposed at two ends of the first plate body along an extension direction of the battery cell, and at least a part of a projection of the first support plate on the first plate body covers an end area of the battery cell; and
a sealing cover covering a top of the tray, wherein the sealing cover includes a second plate body, a first reinforcing plate disposed at two ends of the second plate body along the extension direction of the battery cell, and at least a part of a projection of the first reinforcing plate on the second plate body covers the end area of the battery cell.

According to an embodiment of the present disclosure, the tray further includes at least one middle beam. The middle beam is disposed between the two ends of the first plate body along the extension direction of the battery cell, a second support plate disposed at a position of the first plate body that corresponds to the middle beam, and at least a part of a projection of the second support plate on the first plate body covers an end area of the battery cell that is close to the middle beam.

The sealing cover further includes a second reinforcing plate, the second reinforcing plate being disposed at a position of the second plate body that corresponds to the middle beam, and at least a part of a projection of the second reinforcing plate on the second plate body covers the end area of the battery cell that is close to the middle beam.

According to an embodiment of this application, the first support plate includes a first support section, a projection of the first support section on the first plate body covers the end area of the battery cell, and a length of the first support section along the extension direction of the battery cell occupies 1/3 to 2/3 of the entire first support plate; and/or
the first reinforcing plate includes a first reinforcing section, a projection of the first reinforcing section on the second plate body covers the end area of the battery cell, and a length of the first reinforcing section along the extension direction of the battery cell occupies 1/3 to 2/3 of the entire first reinforcing plate.

According to an embodiment of the present disclosure, the second support plate includes a second support section, a projection of the second support section on the first plate body covers the end area of the battery cell that is close to the middle beam, and a length of the second support section along the extension direction of the battery cell is equal to the length of the first support section along the extension direction of the battery cell; and/or
the second reinforcing plate includes a second reinforcing section, a projection of the second reinforcing section on the second plate body covers the end area of the battery cell that is close to the middle beam, and a length of the second reinforcing section along the extension direction of the battery cell is equal to the length of the first reinforcing section along the extension direction of the battery cell.

According to an embodiment of the present disclosure, the projection of the first support section on the first plate body at least partially overlaps the projection of the first reinforcing section on the second plate body, and the projection of the second support section on the first plate body at least partially overlaps the projection of the second reinforcing section on the second plate body.

According to an embodiment of the present disclosure, a length of the first support plate along the extension direction of the battery cell is equal to half of a length of the second support plate along the extension direction of the battery cell; and/or
a length of the first reinforcing plate along the extension direction of the battery cell is equal to half of a length of the second reinforcing plate along the extension direction of the battery cell.

According to an embodiment of the present disclosure, the first plate body is a cooling plate, the first plate body includes a flat plate and a wavy plate that are mutually assembled to form a dielectric channel internally, and two end parts of the wavy plate are configured as flat parts that are configured to be fixedly connected to the flat plate; and a cross-section of the first support plate along the extension direction of the battery cell is constructed in a step shape, the first support plate includes a support body and a protruding part that protrudes outward relative to the support body, and the protruding part is configured to be supported on a surface of the flat part.

According to an embodiment of the present disclosure, a cavity structure is formed inside the first support plate, and a plurality of reinforcing ribs are spaced apart in the cavity structure along the extension direction of the battery cell.

According to an embodiment of the present disclosure, the first support plate is provided with a notch configured to avoid a joint of the cooling plate.

According to an embodiment of the present disclosure, a plurality of studs are disposed at a position of the first plate body that corresponds to the second support plate, the plurality of studs are spaced apart along an extension direction of the second support plate, the second support plate is provided with through-holes for the studs to pass through, and the studs passing through the through-holes are connected to stud sleeves, to detachably dispose the second support plate on the first plate body.

According to an embodiment of the present disclosure, the through-hole is a sinking hole.

According to an embodiment of the present disclosure, the tray further includes a front beam and a rear beam, the front beam and the rear beam are respectively disposed at the two ends of the first plate body along the extension direction of the battery cell, at least one of the front beam and the rear beam is provided with a chamber configured to accommodate an electrical component, and the projection of the first support plate on the first plate body covers at least a part of the chamber.

According to an embodiment of the present disclosure, the chamber includes a first chamber disposed on the front beam that is configured to accommodate a distribution box, and a low-voltage plug-in mounting hole and a high-voltage plug-in mounting hole are respectively disposed on two sides of the first chamber; and/or the chamber includes a second chamber disposed on the rear beam that is configured to accommodate a fuse and a relay, and the fuse is configured to connect a plurality of battery cells in series.

According to an embodiment of the present disclosure, the front beam and/or the rear beam further include/includes a side sealing cover sealing the chamber, the side sealing cover is detachably disposed on the front beam and/or the rear beam, and a sealing ring is further disposed between the side sealing cover and the front beam and/or the rear beam.

According to an embodiment of the present disclosure, explosion-proof valves are further respectively disposed on two sides of the chamber.

According to an embodiment of the present disclosure, the sealing cover further includes a thermal insulation layer and a composite material layer, and the second plate body is disposed between the thermal insulation layer and the composite material layer.

According to a second aspect of embodiments of the present disclosure, a battery pack is provided, including a battery cell and the battery box according to any one of the foregoing implementations.

According to a third aspect of embodiments of the present disclosure, a vehicle is provided, including the foregoing battery pack.

The technical solutions provided in the embodiments of the present disclosure may include the following beneficial effects: In the battery box provided in the present disclosure, the first support plate is disposed at a maximum force-bearing position of the tray that corresponds to the battery cell, that is, in an end area of the tray that corresponds to the battery cell, and the first reinforcing plate is disposed in an area of the sealing cover that corresponds to an end part of the battery cell. In this way, structural reinforcement is formed on both upper and lower sides of the maximum force-bearing position of the battery cell, thereby improving overall structural strength of the battery box, and facilitating improvement of driving safety.

It should be understood that the foregoing general description and the following detailed description are merely exemplary and explanatory, and are not intended to limit the present disclosure.

### BRIEF DESCRIPTION OF DRAWINGS

The accompanying drawings are intended to provide a further understanding of the present disclosure and constitute a part of the specification. They are used together with the following specific implementations to explain the present disclosure, but do not constitute a limitation on the present disclosure. In the accompanying drawings:
FIG. 1 is an exploded view of a structure of a battery pack according to an example embodiment;
FIG. 2 is a three-dimensional view of a battery box according to an example embodiment;
FIG. 3 is a three-dimensional view of a rear beam according to an example embodiment;
FIG. 4 is a top view of the battery box in FIG. 2;
FIG. 5a is a side view of the battery box in FIG. 2;
FIG. 5b is a partially enlarged view of a part A in FIG. 5a;
FIG. 5c is a partially enlarged view of a part D in FIG. 5b;
FIG. 5d is a partially enlarged view of a part B in FIG. 5a;
FIG. 5e is a partially enlarged view of a part C in FIG. 5a;
FIG. 6 is a schematic diagram of a first support plate according to an example embodiment;
FIG. 7 is a cross-sectional view of the first support plate in FIG. 6 in an extension direction of a battery cell;
FIG. 8 is a schematic diagram of a second support plate according to an example embodiment;
FIG. 9 is a schematic diagram of a mounting structure of a second support plate according to an example embodiment;
FIG. 10 is a schematic diagram of a sealing cover according to an example embodiment;
FIG. 11 is a schematic diagram of another sealing cover according to an example embodiment;
FIG. 12a is a side view of a battery box according to an example embodiment;
FIG. 12b is a partially enlarged view of a part E in FIG. 12a;
FIG. 12c is a partially enlarged view of a part G in FIG. 12a; and
FIG. 12d is a partially enlarged view of a part F in FIG. 12a; and
FIG. 13 is a schematic diagram of a vehicle according to an example embodiment.

### DESCRIPTION OF EMBODIMENTS

Example embodiments are described herein in detail, examples of the example embodiments are shown in the accompanying drawings. When the following description relates to the accompanying drawings, unless otherwise indicated, same numbers in different accompanying drawings represent same or similar elements. Implementations described in the following example embodiments do not represent all implementations consistent with the present disclosure. On the contrary, they are merely examples of apparatuses and methods consistent with some aspects that are of the present disclosure and that are described in detail in the appended claims.

In the absence of the opposite description, the used positional words such as "up, down, left, and right" are defined based on the directions indicated in the corresponding drawings, and "inside" and "outside" refer to the inside and the outside of a contour of a corresponding component. In addition, the terms "first", "second" and the like used in the present disclosure are intended to distinguish one element from another element, and do not have an order or importance.

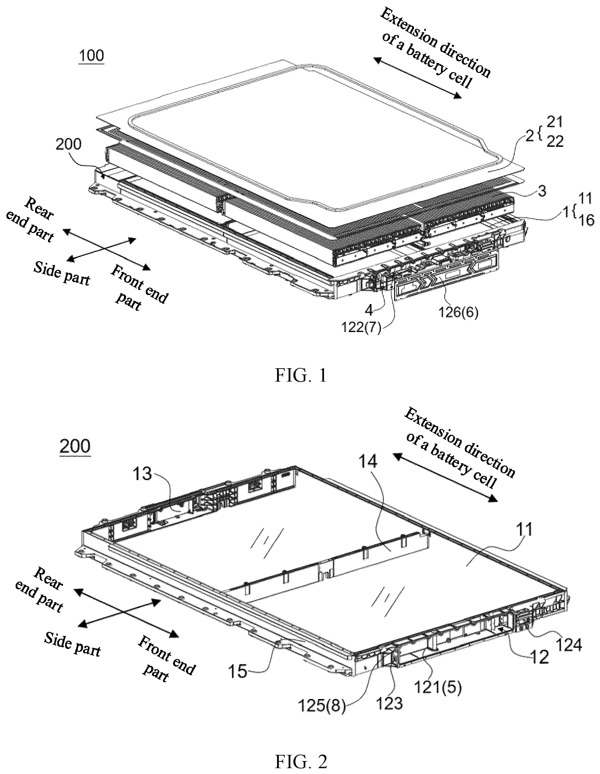

As shown in FIG. 1 to FIG. 12d, an embodiment of the present disclosure provides a battery box 200. The battery box 200 includes a tray 1 configured to carry a battery cell 3 and a sealing cover 2 covering a top of the tray 1. The tray 1 includes a first plate body 11, a first support plate 16 disposed at two ends of the first plate body 11 along an extension direction of the battery cell 3, and at least a part of a projection of the first support plate 16 on the first plate body 11 covers an end area of the battery cell 3. The sealing cover 2 includes a second plate body 21, a first reinforcing plate 22 disposed at two ends of the second plate body 21 along the extension direction of the battery cell 3, and at least a part of a projection of the first reinforcing plate 22 on the second plate body 21 covers the end area of the battery cell 3. It should be noted that the extension direction of the battery cell 3 is a length direction of the battery cell 3.

The first plate body 11 is configured to carry the battery cell 3 from a bottom, a front beam 12 and a rear beam 13 are respectively disposed at the two ends of the first plate body 11 along the extension direction of the battery cell 3, and a side beam 15 is disposed on two sides of the first plate body 11 along the extension direction of the battery cell 3. The front beam 12, the side beam 15, and the rear beam 13 are enclosed and assembled to form a space for accommodating the battery cell 3. The first support plate 16 may be disposed on the first plate body 11 in a manner such as welding, and the first support plate 16 has a same extension direction as the front beam 12 and the rear beam 13. The first support plate 16 is welded integrally to a frame of the tray 1. Specifically, two end parts of the first support plate 16 are welded to the side beams 15 of the tray 1, and side edges of the first support plate 16 are welded to the front beam 12 and the rear beam 13.

The end area of the battery cell 3 usually bears a relatively large load. It should be noted that, the end area of the battery cell 3 referred to herein extends inward from an end surface of the battery cell 3 by a distance of 20 mm to 50 mm. In addition, that at least a part of a projection of the first support plate 16 on the first plate body 11 covers an end area of the battery cell 3 means the following: In the extension direction of the battery cell 3, one end of the first support plate 16 extends to bottoms of the front beam 12 and the rear beam 13, and the other end of the first support plate 16 at least partially extends to a part below an end part of the battery cell 3, thereby effectively supporting the end part of the battery cell 3.

The sealing cover 2 includes a second plate body 21, a first reinforcing plate 22 disposed at two ends of the second plate body 21 along the extension direction of the battery cell 3, and at least a part of a projection of the first reinforcing plate 22 on the second plate body 21 covers the end area of the battery cell 3. The second plate body 21 is configured to protect the battery cell 3 from a top, and form, with the tray 1, a sealed space for accommodating the battery cell 3. That at least a part of a projection of the first reinforcing plate 22 on the second plate body 21 covers the end area of the battery cell 3 means the following: One end of the first reinforcing plate 22 extends to tops of the front beam 12 and the rear beam 13, and the other end of the first reinforcing plate 22 at least partially extends to a part above the end part of the battery cell 3, thereby effectively reinforcing the end part of the battery cell 3.

The technical solution provided in this embodiment of the present disclosure may include the following beneficial effects: In the battery box 200 provided in the present disclosure, the first support plate 16 is disposed at a maximum force-bearing position of the tray 1 that corresponds to the battery cell 3, that is, in an end area of the tray 1 that corresponds to the battery cell 3, and the first reinforcing plate 22 is disposed in an area of the sealing cover 2 that corresponds to an end part of the battery cell 3. In this way, structural reinforcement is formed on both upper and lower sides of the maximum force-bearing position of the battery cell 3, thereby improving overall structural strength of the battery box, and facilitating improvement of driving safety.

At least one of the front beam 12 and the rear beam 13 is provided with a chamber 5 configured to accommodate an electrical component, and the projection of the first support plate 16 on the first plate body 11 covers at least a part of the chamber 5. Specifically, as shown in FIG. 1 and FIG. 2, a first chamber 121 is disposed on the front beam 12. An example in which a distribution box 4 is to be accommodated is used for description. The first chamber 121 is disposed on the front beam 12, so that the distribution box 4 can be isolated from the battery cell 3. In this way, the battery cell 3 is not affected by heat generated during working of the distribution box 4. However, due to the presence of the first chamber 121, strength of the front beam 12 is reduced. Therefore, the projection of the first support plate 16 on the first plate body 11 is enabled to cover at least a part of the first chamber 121, which helps compensate for strength reduction caused by disposing of the first chamber 121, and protects the distribution box 4 accommodated in the first chamber 121.

The front beam 12 and/or the rear beam 13 further include/includes a side sealing cover 6 configured to seal the chamber 5, and the side sealing cover 6 is detachably disposed on the front beam 12 and/or the rear beam 13. For example, the first chamber 121 may be buckled by using a first side sealing cover 126 for sealing, and the first side sealing cover 126 is detachably connected to the front beam 12 through a fastener such as a bolt. To further improve sealing performance, a sealing ring 7 is further disposed between the side sealing cover 6 and the front beam 12 and/or the rear beam 13. For example, a first sealing ring 122 is further disposed between the first side sealing cover 126 and an end surface of the front beam. In addition, the front beam 12 may be further provided with a low-voltage plug-in mounting hole 123 and a high-voltage plug-in mounting hole 124, and the low-voltage plug-in mounting hole 123 and the high-voltage plug-in mounting hole 124 are respectively disposed on two sides of the first chamber 121, so that a high-voltage wiring harness and a low-voltage wiring harness of the distribution box 4 can be respectively led out from the two sides, thereby avoiding mutual interference between the high-voltage wiring harness and the low-voltage wiring harness. Moreover, explosion-proof valves 8 may be further respectively disposed on two sides of the chamber 5. For example, one first explosion-proof valve 125 is further disposed on each of two sides of the first chamber 121, to increase a speed of a thermal runaway reaction of the battery box and improve safety of the battery box.

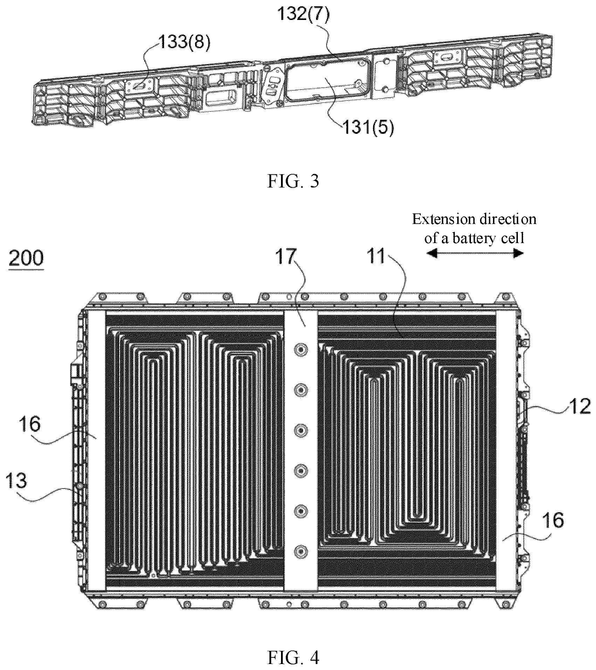

As shown in FIG. 3, a second chamber 131 is disposed on the rear beam 13. An example in which a fuse and a relay are accommodated in the second chamber 131 is used for description. The fuse is configured to connect a plurality of battery cells 3 in series, and the relay may be connected to a controller of the battery box. The controller controls connection or disconnection of the relay. When the controller receives an internal abnormality of the battery box, such as an excessively high temperature or an excessively large voltage, the controller controls the relay to be disconnected. When a problem such as a short circuit occurs in the battery box, the fuse can be disconnected to protect the battery box.

Similar to the first chamber 121, due to the presence of the second chamber 131, strength of the rear beam 13 is reduced. Therefore, the projection of the first support plate 16 on the first plate body 11 is enabled to cover at least a part of the second chamber 131, which helps compensate for strength reduction caused by the second chamber 131, and protects the fuse and the relay that are accommodated in the second chamber 131.

The second chamber 131 may be buckled by using a second side sealing cover for sealing, and the second side sealing cover may be detachably connected to the rear beam 13 through a fastener such as a bolt. To further improve sealing performance, a second sealing ring 132 is further disposed between the second side sealing cover and an end surface of the rear beam. In addition, one second explosion-proof valve 133 is further disposed on each of two sides of the second chamber 131, to increase a speed of a thermal runaway reaction of the battery box and improve safety of the battery box.

In some implementations, as shown in FIG. 2 and FIG. 4, the tray 1 further includes at least one middle beam 14 disposed between the two ends of the first plate body 11 along the extension direction of the battery cell 3. The middle beam 14 has a same extension direction as the front beam 12 and the rear beam 13. A bottom of the middle beam 14 is connected to the first plate body 11 in a manner such as bonding, and two end parts of the middle beam 14 are connected to the two side beams 15 in a manner such as welding.

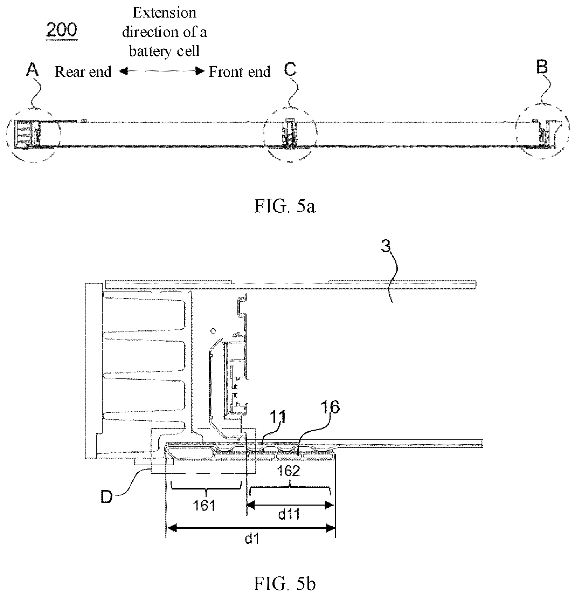

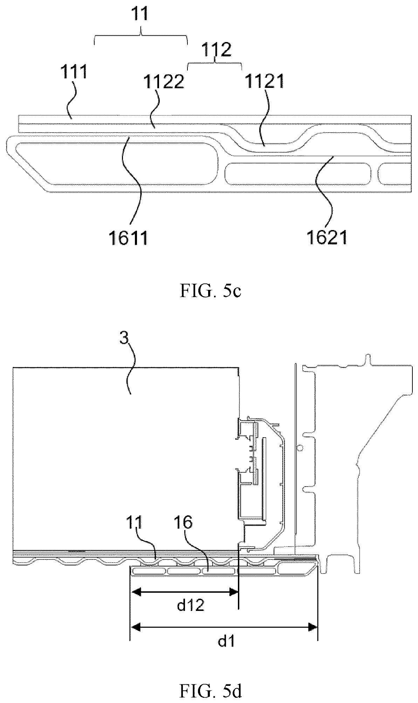

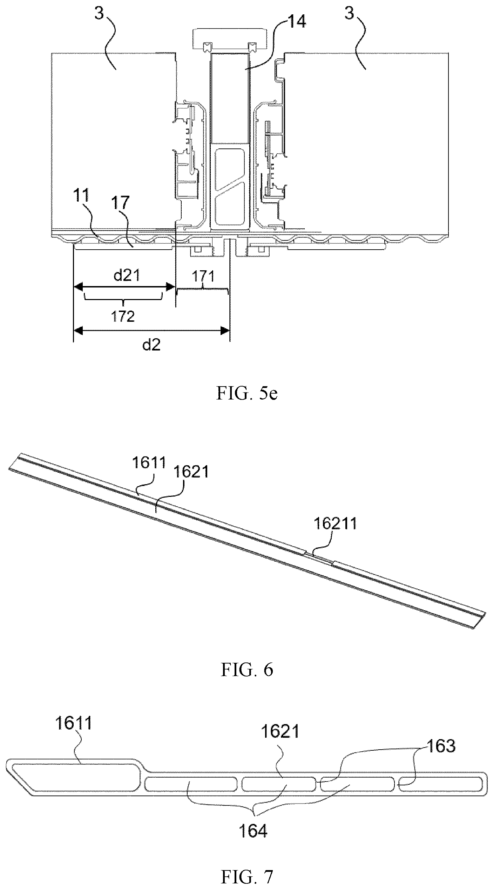

A plurality of accommodating spaces are formed in the tray 1 by disposing the middle beam 14. In this way, two sides of the middle beam 14 along the extension direction of the battery cell 3 are correspondingly end areas of the battery cell 3, and the battery cells 3 on the two sides of the middle beam 14 may be electrically connected by using a connection structure such as a copper busbar. The middle beam 14 has at least a function of isolating the battery cells 3 on the two sides, to decrease a speed of a thermal runaway reaction of the battery box. To support an end area of the part of the battery cell 3, in some implementations, as shown in FIG. 5a to FIG. 5e, a second support plate 17 is disposed at a position of the first plate body 11 that corresponds to the middle beam 14, and at least a part of a projection of the second support plate 17 on the first plate body 11 covers an end area of the battery cell 3 that is close to the middle beam 14. For example, along the extension direction of the battery cell 3, a middle area of the second support plate 17 is located at a bottom of the middle beam 14, and two sides of the second support plate 17 extend to a part below the end part of the battery cell 3, to effectively support the end part of the battery cell 3.

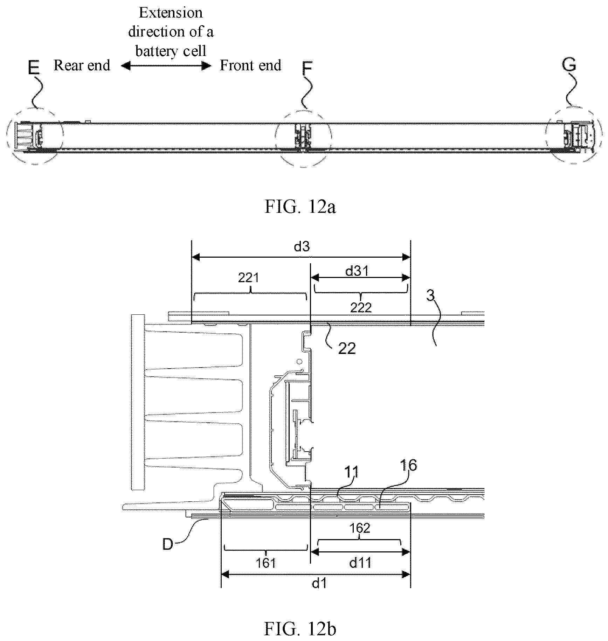

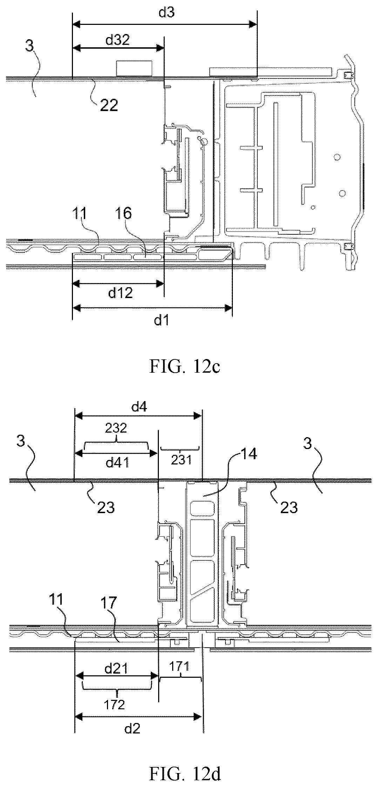

In some other implementations, as shown in FIG. 12a to FIG. 12d, the sealing cover 2 further includes a second reinforcing plate 23 disposed at a position of the second plate body 21 that corresponds to the middle beam 14, and at least a part of a projection of the second reinforcing plate 23 on the second plate body 21 covers the end area of the battery cell 3 that is close to the middle beam 14. For example, along the extension direction of the battery cell 3, a middle area of the second reinforcing plate 23 is located at a top of the middle beam 14, and two sides of the second reinforcing plate 23 extend to a part above the end part of the battery cell 3, to effectively reinforce the end part of the battery cell 3.

In still some other implementations, a second support plate 17 is disposed at a position of the first plate body 11 that corresponds to the middle beam 14, and at least a part of a projection of the second support plate 17 on the first plate body 11 covers an end area of the battery cell 3 that is close to the middle beam 14. In addition, the sealing cover 2 further includes a second reinforcing plate 23 disposed at a position of the second plate body 21 that corresponds to the middle beam 14, and at least a part of a projection of the second reinforcing plate 23 on the second plate body 21 covers the end area of the battery cell 3 that is close to the middle beam 14.

In some implementations, as shown in FIG. 5a to FIG. 5e, the first support plate 16 includes a first support section 162, or the first support plate 16 includes a first connection section 161 and a first support section 162. A projection of the first support section 162 on the first plate body 11 covers the end area of the battery cell 3. Specifically, the first connection section 161 is configured to connect the first support plate 16 to the front beam 12 or the rear beam 13, that is, the first support section 162 extends to a part below the end area of the battery cell 3 to play a support role. Lengths d11 and d12 of the first support section 162 along the extension direction of the battery cell 3 occupy 1/3 to 2/3 of a length d1 of the entire first support plate 16. For example, if the length d1 of the first support plate 16 along the extension direction of the battery cell 3 is 80 mm, the lengths d11 and d12 of the first support section 162 along the extension direction of the battery cell 3 are approximately 25 mm to 55 mm. The lengths d11 and d12 of the first support section 162 along the extension direction of the battery cell 3 are enabled to occupy 1/3 to 2/3 of the length d1 of the entire first support plate 16, so that it can be ensured that the first support plate 16 has a sufficient support length for the battery cell 3, and strength of connection between the first support plate 16 and the front beam 12 or the rear beam 13 can be further ensured.

In some other implementations, as shown in FIG. 12a to FIG. 12d, the first reinforcing plate 22 includes a first reinforcing section 222, or includes a first extension section 221 and a first reinforcing section 222. A projection of the first reinforcing section 222 on the second plate body 21 covers the end area of the battery cell 3. Specifically, the first extension section 221 extends to the tops of the front beam 12 and the rear beam 13, that is, the first reinforcing section 222 extends to a part above the end area of the battery cell 3 to play a reinforcement role. Lengths d31 and d32 of the first reinforcing section 222 along the extension direction of the battery cell 3 occupy 1/3 to 2/3 of a length d3 of the entire first reinforcing plate 22, to ensure that the first support plate 16 has a sufficient reinforcement length for the battery cell 3.

In still some other implementations, the lengths d11 and d12 of the first support section 162 along the extension direction of the battery cell 3 occupy 1/3 to 2/3 of the length d1 of the entire first support plate 16, and the lengths d31 and d32 of the first reinforcing section 222 along the extension direction of the battery cell 3 occupy 1/3 to 2/3 of the length d3 of the entire first reinforcing plate 22.

According to an implementation provided in the present disclosure, the projection of the first support section 162 on the first plate body 11 at least partially overlaps the projection of the first reinforcing section 222 on the second plate body 21, and the projection of the second support section 172 on the first plate body 11 at least partially overlaps the projection of the second reinforcing section 232 on the second plate body 21. In some implementations, the lengths d11 and d12 of the first support section 162 along the extension direction of the battery cell 3 are equal to the lengths d31 and d32 of the first reinforcing section 222 along the extension direction of the battery cell 3, that is, the first support plate 16 and the first reinforcing plate 22 support/reinforce the battery cell 3 by a same size. A length d21 of the second support section 172 along the extension direction of the battery cell 3 is equal to a length d41 of the second reinforcing section 232 along the extension direction of the battery cell 3, that is, the second support plate 17 and the second reinforcing plate 23 support/reinforce the battery cell 3 by a same size. In this way, the battery cell 3 is uniformly stressed on both upper and lower sides, thereby further improving stability of the battery box.

Further, the length d1 of the first support plate 16 along the extension direction of the battery cell 3 is enabled to be equal to half of a length d2 of the second support plate 17 along the extension direction of the battery cell 3; and/or the length d3 of the first reinforcing plate 22 along the extension direction of the battery cell 3 is enabled to be equal to half of a length d4 of the second reinforcing plate 23 along the extension direction of the battery cell 3, which helps standardize sizes of the support plate and the reinforcing plate, and improve versatility of the support plate and the reinforcing plate. Specifically, even if in a battery box in which different types of battery cells are configured, positions of the support plate and the reinforcing plate do not need to be changed to ensure that a same support/reinforcing length is ensured in end parts of all the battery cells 3.

According to an implementation provided in the present disclosure, as shown in FIG. 5c, the first plate body 11 may be configured as a cooling plate. In this case, the first plate body 11 not only has a function of carrying the battery cell 3, but also can cool the battery cell 3 to ensure an optimal working state of a battery. Specifically, the first plate body 11 includes a flat plate 111 and a wavy plate 112 that are mutually assembled to form a dielectric channel inside. Two end parts of the wavy plate 112 are configured as flat parts 1122 that are fixedly connected to the flat plate 111, that is, an accommodating cavity is formed in an end part of the first plate body 11. In addition, referring to FIG. 6 and FIG. 7, a cross-section of the first support plate 16 along the extension direction of the battery cell 3 is constructed in a step shape, and the first support plate 16 includes a support body 1621 and a protruding part 1611 that protrudes outward relative to the support body 1621 to be supported on a surface of the flat part 1122, that is, the accommodating cavity formed in the end part of the first plate body 11 is filled with the protruding part 1611, thereby improving a degree of bonding between the first support plate 16 and the first plate body 11 to improve a support effect. Optionally, the first support plate 16 is provided with a notch 16211 configured to avoid a joint of the cooling plate, and a disposing position of the notch 16211 may be adaptively designed based on a position of an actual pipeline.

Further, a cavity structure 164 is formed inside the first support plate 16, and a plurality of reinforcing ribs 163 are spaced apart in the cavity structure 164 along the extension direction of the battery cell 3. Forming the cavity structure 164 inside can reduce mass of the first support plate 16 to reduce overall mass of the tray 1, thereby facilitating lightweight design of the battery box. In addition, the reinforcing ribs 163 are disposed to compensate for a loss of structural strength caused by the cavity structure 164.

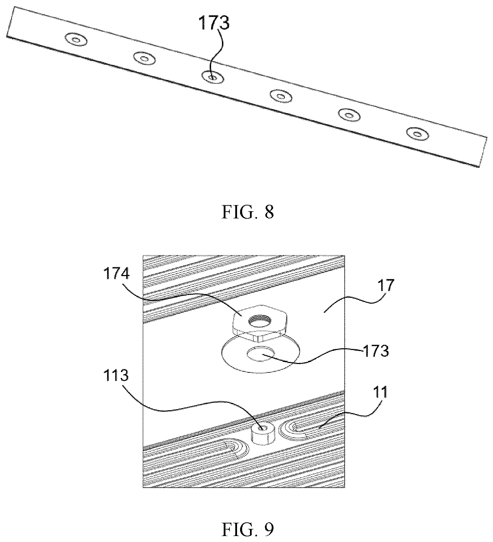

In some other implementations, as shown in FIG. 8 and FIG. 9, a plurality of studs 113 are spaced apart along an extension direction of the second support plate 17 at a position of the first plate body 11 that corresponds to the second support plate 17, the second support plate 17 is provided with through-holes 173 for the studs 113 to pass through, and the studs 113 passing through the through-holes 173 are connected to stud sleeves 174, to detachably dispose the second support plate 17 on the first plate body 11. Generally, the first support plate 16 is welded integrally to the frame of the tray 1 through an end part and a side part, that is, there are three welding positions to ensure connection strength. However, because the second support plate 17 is disposed at a middle position of the first plate body 11, only two end parts can be connected to the first plate body 11, and are specifically welded integrally to the side beams 15. In this way, a screwing manner can be used to compensate for insufficient connection strength caused by the case that only two ends of the second support plate 17 can be connected to the first plate body 11.

Further, the through-hole 173 may be a sinking hole. In this way, the stud sleeve 174 can sink into the sinking hole after being mounted, to reduce a ground clearance of the battery box, thereby reducing a height of the battery box, and facilitating a mounting layout of an entire vehicle.

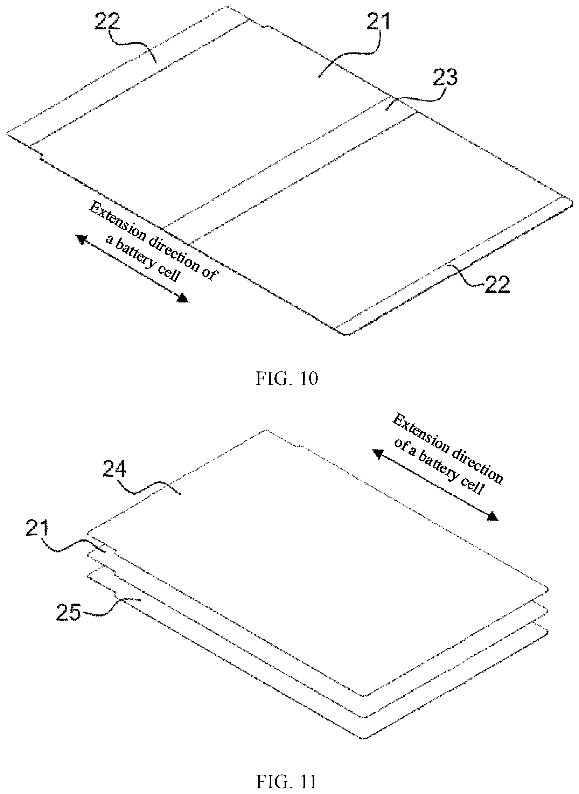

According to an implementation of the present disclosure, as shown in FIG. 10 and FIG. 11, the sealing cover 2 may further include a thermal insulation layer 24 and a composite material layer 25, and the second plate body 21 is disposed between the thermal insulation layer 24 and the composite material layer 25. Specifically, a thermal insulation material may be made of ceramic wool, a composite material may be made of epoxy resin plus continuous glass fiber, and the composite material layer 25 and the second plate body 21 are manufactured integrally in a manner such as hot pressing. The thermal insulation layer 24 is bonded to the second plate body 21 through a glue to form the sealing cover 2. The composite material layer 25 of the sealing cover 2 is fastened to an upper surface of the battery cell 3 through bonding by using a glue. The composite material layer 25 is in contact with the battery cell 3 to achieve good insulation performance for resisting a high temperature. When the battery box has a high temperature generated by thermal runaway, good insulation performance can be ensured between the sealing cover 2 and the battery cell 3. In addition, the composite material layer 25 further has relatively high strength.

According to a second aspect of embodiments of the present disclosure, as shown in FIG. 1, a battery pack 100 is provided, including a battery cell 3 and the battery box 200 according to any one of the foregoing implementations, and has all beneficial effects thereof. Details are not described herein again. The battery cell 3 is accommodated inside the battery box 200.

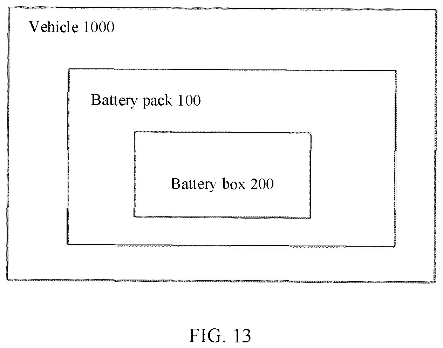

According to a third aspect of embodiments of the present disclosure, as shown in FIG. 13, a vehicle 1000 is provided, including the foregoing battery pack 100, and has all beneficial effects thereof. Details are not described herein again.

The foregoing describes in detail the preferred implementations of the present disclosure with reference to the accompanying drawings. However, the present disclosure is not limited to specific details in the foregoing implementations. A plurality of simple variations can be made to the technical solutions of the present disclosure within the technical concept scope of the present disclosure, and all these simple variations fall within the protection scope of the present disclosure.

In addition, it should be noted that the specific technical features described in the foregoing specific implementations may be combined in any proper manner without a contradiction. To avoid unnecessary repetition, various possible combination manners are not otherwise described in the present disclosure.

In addition, various different implementations of the present disclosure may be combined arbitrarily, and the combination shall also be considered as the content disclosed in the present disclosure, provided that the combination is not contrary to the idea of the present disclosure.

## Claims

1. A battery box, wherein the battery box (100) comprises:
a tray (1), configured to carry a battery cell (3), wherein the tray (1) comprises a first plate body (11), a first support plate (16) disposed at two ends of the first plate body (11) along an extension direction of the battery cell (3), and at least a part of a projection of the first support plate (16) on the first plate body (11) covers an end area of the battery cell (3); and
a sealing cover (2) covering a top of the tray (1), wherein the sealing cover (2) comprises a second plate body (21), a first reinforcing plate (22) disposed at two ends of the second plate body (21) along the extension direction of the battery cell (3), and at least a part of a projection of the first reinforcing plate (22) on the second plate body (21) covers the end area of the battery cell (3).

2. The battery box according to claim 1, wherein the tray (1) further comprises at least one middle beam (14), the middle beam (14) is disposed between the two ends of the first plate body (11) along the extension direction of the battery cell (3), a second support plate (17) is disposed at a position of the first plate body (11) corresponds to the middle beam (14), and at least a part of a projection of the second support plate (17) on the first plate body (11) covers an end area of the battery cell (3) that is close to the middle beam (14); and
the sealing cover (2) further comprises a second reinforcing plate (23), the second reinforcing plate (23) is disposed at a position of the second plate body (21) corresponds to the middle beam (14), and at least a part of a projection of the second reinforcing plate (23) on the second plate body (21) covers the end area of the battery cell (3) that is close to the middle beam (14).

3. The battery box according to claim 2, wherein the first support plate (16) comprises a first support section (162), a projection of the first support section (162) on the first plate body (11) covers the end area of the battery cell (3), and a length of the first support section (162) along the extension direction of the battery cell (3) occupies 1/3 to 2/3 of the entire first support plate (16); and/or
the first reinforcing plate (22) comprises a first reinforcing section (222), a projection of the first reinforcing section (222) on the second plate body (21) covers the end area of the battery cell (3), and a length of the first reinforcing section (222) along the extension direction of the battery cell (3) occupies 1/3 to 2/3 of the entire first reinforcing plate (22).

4. The battery box according to claim 3, wherein the second support plate (17) comprises a second support section (172), a projection of the second support section (172) on the first plate body (11) covers the end area of the battery cell (3) that is close to the middle beam (14), and a length of the second support section (172) along the extension direction of the battery cell (3) is equal to the length of the first support section (162) along the extension direction of the battery cell (3); and/or
the second reinforcing plate (23) comprises a second reinforcing section (232), a projection of the second reinforcing section (232) on the second plate body (21) covers the end area of the battery cell (3) that is close to the middle beam (14), and a length of the second reinforcing section (232) along the extension direction of the battery cell (3) is equal to the length of the first reinforcing section (222) along the extension direction of the battery cell (3).

5. The battery box according to claim 4, wherein the projection of the first support section (162) on the first plate body (11) at least partially overlaps the projection of the first reinforcing section (222) on the second plate body (21), and the projection of the second support section (172) on the first plate body (11) at least partially overlaps the projection of the second reinforcing section (232) on the second plate body (21).

6. The battery box according to any one of claims 2 to 5, wherein a length of the first support plate (16) along the extension direction of the battery cell (3) is equal to half of a length of the second support plate (17) along the extension direction of the battery cell (3); and/or
a length of the first reinforcing plate (22) along the extension direction of the battery cell (3) is equal to half of a length of the second reinforcing plate (23) along the extension direction of the battery cell (3).

7. The battery box according to any one of claims 1 to 6, wherein the first plate body (11) is a cooling plate, the first plate body (11) comprises a flat plate (111) and a wavy plate (112) that are mutually assembled to form a dielectric channel inside, and two end parts of the wavy plate (112) are constructed as flat parts (1122) configured to be fixedly connected to the flat plate (111); and a cross-section of the first support plate (16) along the extension direction of the battery cell (3) is constructed in a step shape, the first support plate (16) comprises a support body (1621) and a protruding part (1611) that protrudes outward relative to the support body (1621), and the protruding part (1611) is configured to be supported on a surface of the flat part (1122).

8. The battery box according to claim 7, wherein a cavity structure (164) is formed inside the first support plate (16), and a plurality of reinforcing ribs (163) are spaced apart in the cavity structure (164) along the extension direction of the battery cell (3).

9. The battery box according to claim 7 or 8, wherein the first support plate (16) is provided with a notch (16211) configured to avoid a joint of the cooling plate.

10. The battery box according to any one of claims 2 to 9, wherein a plurality of studs (113) are disposed at a position of the first plate body (11) corresponds to the second support plate (17), the plurality of studs (113) are spaced apart along an extension direction of the second support plate (17), the second support plate (17) is provided with through-holes (173) for the studs (113) to pass through, and the studs (113) passing through the through-holes (173) are connected to stud sleeves (174), to detachably dispose the second support plate (17) on the first plate (11).

11. The battery box according to claim 10, wherein the through-hole (173) is a sinking hole.

12. The battery box according to any one of claims 1 to 11, wherein the tray (1) further comprises a front beam (12) and a rear beam (13), the front beam (12) and the rear beam (13) are respectively disposed at the two ends of the first plate body (11) along the extension direction of the battery cell (3), at least one of the front beam (12) and the rear beam (13) is provided with a chamber (5) configured to accommodate an electrical component, and the projection of the first support plate (16) on the first plate body (11) covers at least a part of the chamber (5).

13. The battery box according to claim 12, wherein the chamber (5) comprises a first chamber (121) disposed on the front beam (12) that is configured to accommodate a distribution box (4), and a low-voltage plug-in mounting hole (123) and a high-voltage plug-in mounting hole (124) are respectively disposed on two sides of the first chamber (121); and/or the chamber (5) comprises a second chamber (131) disposed on the rear beam (13) that is configured to accommodate a fuse and a relay, and the fuse is configured to connect a plurality of the battery cells (3) in series.

14. The battery box according to claim 12 or 13, wherein the front beam (12) and/or the rear beam (13) further comprise/comprises a side sealing cover (6) configured to seal the chamber (5), the side sealing cover (6) is detachably disposed on the front beam (12) and/or the rear beam (13), and a sealing ring (7) is disposed between the side sealing cover (6) and the front beam (12) and/or the rear beam (13).

15. The battery box according to any one of claims 12 to 14, wherein explosion-proof valves (8) are further respectively disposed on two sides of the chamber (5).

16. The battery box according to any one of claims 1 to 15, wherein the sealing cover (2) further comprises a thermal insulation layer (24) and a composite material layer (25), and the second plate body (21) is disposed between the thermal insulation layer (24) and the composite material layer (25).

17. A battery pack, comprising a battery cell (3) and the battery box (200) according to any one of claims 1 to 16.

18. A vehicle, comprising the battery pack (100) according to claim 17.
